# EUROPÄISCHE PATENTSCHRIFT

(11) **EP 3 507 659 B1**
(45) Veröffentlichungstag und Bekanntmachung des Hinweises auf die Patenterteilung: **09.10.2024**
(21) Anmeldenummer: 17768024.6
(22) Anmeldetag: 30.08.2017
(51) Int. Cl.: G05B 19/4099, G05B 19/418, F01D 5/14

(54) **VERFAHREN ZUR HERSTELLUNG VON SCHAUFELBLÄTTERN EINER MIT EINEM FLUID INTERAGIERENDEN MASCHINE**
METHOD FOR THE PRODUCTION OF BLADES OF A MACHINE INTERACTING WITH A FLUID
PROCÉDÉ DE FABRICATION DE PALES D'UNE MACHINE INTERAGISSANT AVEC UN FLUIDE

(30) Priorität: 02.09.2016 DE 102016216612
(43) Veröffentlichungstag der Anmeldung: 10.07.2019
(73) Patentinhaber: Fraunhofer-Gesellschaft zur Förderung der angewandten Forschung e.V., 80686 München (DE)
(72) Erfinder: STOEVESANDT, Bernhard, 28201 Bremen (DE); SCHRAMM, Matthias, 90403 Nürnberg (DE); SAYER, Florian, 28213 Bremen (DE); ROSEMANN, Heiko, 27570 Bremerhaven (DE); DÖRSCH, Christian, 28215 Bremen (DE)
(74) Vertreter: Pfenning, Meinig & Partner mbB
(86) Internationale Anmeldenummer: PCT/EP2017/071764
(87) Internationale Veröffentlichungsnummer: WO 2018/041896

(56) Entgegenhaltungen:
- WO-A1-2011/044565
- DE-A1- 102010 055 775
- DE-B3- 102013 226 422

## Beschreibung

Die Erfindung liegt auf dem Gebiet des Maschinenbaus und der Fertigungstechnik sowie der Logistik und bezieht sich auf ein Verfahren zur Herstellung von Schaufelblättern einer Maschine.

Mit besonderem Vorteil kann das Verfahren und das System für Schaufelblätter von Maschinen verwendet werden, die mit einem Fluid, also beispielsweise einem Gas oder einer Flüssigkeit, interagieren, insbesondere für Schaufelblätter von luft- oder gasgetriebenen Maschinen, wie beispielsweise Windturbinen. Das Verfahren kann jedoch auch bei Maschinen verwendet werden, deren Schaufelblätter ihrerseits ein Fluid antreiben, wie beispielsweise bei Schiffsantrieben, die Propeller aufweisen, sowie bei Kompressoren.

Speziell wurde das erfindungsgemäße Verfahren und System jedoch für die Anwendung bei Windturbinen entwickelt.

Schaufelblätter oder Rotorblätter von Windenergieanlagen oder einzelnen Windturbinen werden unter Berücksichtigung der aerodynamischen und der mechanisch-dynamischen Bedingungen entworfen. Hierbei ist insbesondere auch die Last durch typische angenommene Windstärken von Belang, sowie die geforderte Effizienz und Leistung der Windenergieanlage.

Die Eigenschaften eines einzelnen Schaufelblattes/Rotorblattes hängen dabei sehr stark von der äußeren Gestalt des Blattes ab. Es wird bei der Produktion versucht, Schaufelblätter reproduzierbar in der gewünschten und entworfenen Form herzustellen; jedoch kommt es regelmäßig zu Abweichungen von der Zielform. Hierdurch ergibt sich einerseits eine verminderte Leistung der Maschine und/oder das Risiko, dass ein Schaufelblatt den mechanischen/ dynamischen Belastungen auf Dauer nicht standhält.

Es ist innerhalb gewisser Grenzen möglich, Abweichungen von der Sollform bei einem Schaufelblatt durch eine Nachbearbeitung zu verringern oder teilweise zu beseitigen. Ein derartiges Verfahren ist beispielsweise aus der EP 2816430 A1 bekannt. Dort wird eine dreidimensionale Abbildung eines gefertigten Schaufelblattes erzeugt, es werden Abweichungen von der Sollform identifiziert, und diese werden durch Nachbearbeitung beseitigt.

Aus der DE 10 2010 055 775 ist ein Verfahren zur Reparatur von Gasturbinenkomponenten bekannt, bei dem die Auswirkung einer Reparatur auf den Betrieb der Gasturbine zunächst durch Berechnung ermittelt wird.

Aus der DE 10 2013 226 422 B3 ist ein Verfahren zur automatisierten Be-wertung von Förderschaufeln einer aerodynamischen Maschine bekannt.

Die DE 10 2012 213 481 A1 lehrt ein Verfahren zur Qualitätsverbesserung bei der Fertigung von Werkstücken. Bei einem Bewertungsschritt wird dort bereits die Auswirkung eines geplanten und noch nicht durchgeführten Bearbeitungsschritts mit einberechnet.

Dabei sind das Vermessen der Schaufelblätter, das Identifizieren von Abweichungen und die Beseitigung von Abweichungen von der Sollform sehr aufwendig und teuer, so dass der Aufwand nicht immer in einem ökonomisch sinnvollen Verhältnis zum Nutzen steht.

Der vorliegenden Erfindung liegt vor dem Hintergrund des Standes der Technik die Aufgabe zugrunde, ein Verfahren und ein System zur Herstellung von Schaufelblättern zu schaffen, das eine möglichst effiziente Nachbearbeitung ermöglicht.

Die Aufgabe wird jeweils durch ein Verfahren mit den Merkmalen eines der Patentansprüche 1 oder 2 gelöst. Die Ansprüche 3 bis 9 zeigen vorteilhafte Ausgestaltungen der Erfindung auf.

Demgemäß bezieht sich die Erfindung auf ein Verfahren zur Herstellung von Schaufelblättern einer fluidgetriebenen Maschine, insbesondere einer Windturbine,
bei dem ein oder mehrere Schaufelblätter geformt werden,
in einem Untersuchungsschritt für eines oder mehrere geformte Schaufelblätter jeweils mehrere geometrische Abweichungen von einer Sollform ermittelt werden, wobei
jeder ermittelten geometrischen Abweichung von der Sollform für jedes Schaufelblatt bezüglich ihrer aerodynamischen und/oder mechanischen Konsequenzen jeweils durch eine erste Einrichtung eine ersteAbweichungsbewertung zugeordnet wird,
jeder ermittelten geometrischen Abweichung von der Sollform für jedes Schaufelblatt jeweils in einer zweiten Einrichtung eine oder mehrere Korrekturmaßnahmen mit jeweils einer Aufwandsbewertung zugeordnet werden und
für jede der ermittelten geometrischen Abweichungen die erste Abweichungsbewertung mit der Aufwandsbewertung in einer Verknüpfungseinrichtung verknüpft wird, wobei bei der Verknüpfung ein Quotient aus der Aufwandsbewertung und der ersten AbweichungsBewertung gebildet wird und aus dem Ergebnis der Verknüpfung die durchzuführenden Korrekturmaßnahmen ermittelt werden, wobei die durchzuführenden Korrekturmaßnahmen summiert werden und, wenn eine bestimmte Aufwandsbewertung überschritten wird, entschieden wird, dass sich die Korrekturmaßnahmen nicht lohnen.

Dieses Verfahren bietet die Möglichkeit einer sinnvollen und wirksamen Qualitätskontrolle, die eine Bewertung der Auswirkungen von Abweichungen der Schaufelblätter von der Sollform erlaubt, wobei die Abweichungen zu dem Aufwand in Beziehung gesetzt werden können, der durch Korrekturmaßnahmen entsteht. Durch ein derartiges Verfahren können die Notwendigkeit einzelner Korrekturmaßnahmen und der Beitrag, den sie zu einer Verbesserung der Form eines Schaufelblattes leisten können, zueinander in Beziehung gesetzt werden, so dass auf einer systematischen Basis Korrekturmaßnahmen priorisiert werden können. Es müssen dabei nicht notwendigerweise alle Abweichungen von der Sollform bei den Schaufelblättern korrigiert werden, so dass in erheblichem Maße Korrekturaufwand eingespart werden kann. Dennoch kann durch ein derartiges Verfahren sichergestellt werden, dass mit minimiertem Korrekturaufwand ein bestimmter, festgelegter Standard bezüglich der Leistungsfähigkeit einer Maschine erreicht wird. Dieser Standard kann, wie weiter unten noch erläutert wird, auf verschiedene Weise gesetzt und definiert werden. Es kann beispielsweise für ein einzelnes Schaufelblatt sichergestellt werden, dass jede einzelne Abweichung von der Sollform bezüglich ihrer aerodynamischen oder mechanisch-dynamischen Auswirkungen unter einer bestimmten Schwelle bleibt oder mittels einer Korrekturmaßnahme unter diese Schwelle gebracht wird. Es kann jedoch auch vorgesehen sein, dass die Summe der Abweichungen eines Schaufelblattes von der Sollform bestimmten Bedingungen genügt. Durch eine Auswahl von Korrekturmaßnahmen kann dies auch für ein Schaufelblatt, für das die Abweichungen anfänglich den Standard übersteigen, sichergestellt werden.

Durch das erfindungsgemäße Verfahren kann somit systematisch ein Qualitätsstandard für Schaufelblätter von Maschinen, die mit einem Fluid interagieren, sichergestellt werden. Der Standard kann jeweils für die Herstellung eines bestimmten Satzes von Schaufelblättern individuell nach dem Wunsch des Herstellers festgelegt werden.

Die Erfindung bezieht sich zudem auch auf ein alternatives Verfahren zur Herstellung von Schaufelblättern einer fluidgetriebenen Maschine, insbesondere einer Windturbine, bei dem
ein oder mehrere Schaufelblätter geformt werden,
in einem Untersuchungsschritt für eines oder mehrere geformte Schaufelblätter jeweils mehrere geometrische Abweichungen von einer Sollform ermittelt werden, wobei
jeder ermittelten geometrischen Abweichung von der Sollform für jedes Schaufelblatt bezüglich ihrer aerodynamischen und/oder mechanischen Konsequenzen jeweils durch eine erste Einrichtung eine erste AbweichungsBewertung zugeordnet wird,
jeder ermittelten geometrischen Abweichung von der Sollform für jedes Schaufelblatt jeweils in einer zweiten Einrichtung eine oder mehrere Korrekturmaßnahmen mit jeweils einer Aufwandsbewertung zugeordnet werden,
jeder ermittelten geometrischen Abweichung für jedes Schaufelblatt bezüglich ihrer aerodynamischen und/oder mechanischen Konsequenzen unter Berücksichtigung der geplanten Korrektur jeweils eine zweite Abweichungsbewertung zugeordnet wird und
für jede der ermittelten geometrischen Abweichungen die erste und die zweite Abweichungsbewertung in einer Verknüpfungseinrichtung mit der Aufwandsbewertung verknüpft werden und aus dem Ergebnis der Verknüpfung die durchzuführenden Korrekturmaßnahmen ermittelt werden, derart, dass für jede Abweichung die Korrekturmaßnahme mit dem besten Verhältnis der zweiten Abweichungsbewertung zur Aufwandsbewertung der jeweiligen Korrekturmaßnahme ausgewählt wird, wobei die durchzuführenden Korrekturmaßnahmen summiert werden und, wenn eine bestimmte Aufwandsbewertung überschritten wird, entschieden wird, dass sich die Korrekturmaßnahmen nicht lohnen.

Bei diesem Verfahren wird für die Bewertung einzelner Korrekturmaßnahmen bei einer Abweichung von der Sollform nicht nur das Maß der Abweichung der Istform von der Sollform zugrunde gelegt, sondern speziell auch die durch die Korrekturmaßnahmen erreichbaren Verbesserungen. Dabei wird berücksichtigt, dass eventuell nicht alle Abweichungen von der Sollform durch die Korrekturmaßnahmen vollständig beseitigt werden können. Einige Abweichungen können durch Korrekturmaßnahmen möglicherweise nur teilweise beseitigt werden, so dass bei solchen Abweichungen teilweise Abhilfe geschaffen werden kann, an den entsprechenden Stellen des Schaufelblattes jedoch weiterhin Abweichungen von der Sollform verbleiben oder nicht ganz verschwinden. In diesem Fall kann die Sinnhaftigkeit von Korrekturmaßnahmen daran gemessen werden, wie weitgehend die Abweichungen von der Sollform beseitigt werden können bzw. wie nah der Sollform durch die Korrekturmaßnahmen gekommen werden kann.

Es kann weiter vorgesehen sein, dass bei der Ermittlung der ersten oder zweiten Abweichungsbewertung jeweils einer geometrischen Abweichung von der Sollform aufgrund eines bestehenden aerodynamischen Modells durch eine differenzielle Änderung eine Differenz eines aerodynamischen Wertes zugeordnet wird.

Grundsätzlich ist es möglich, die aerodynamische Form und Wirkung einmal für die Sollform und einmal für die tatsächlich bei der Vermessung ermittelte Form zu berechnen und zu vergleichen. Hierdurch kann die Auswirkung einer Abweichung von der Sollform, die einer mechanischen und/oder aerodynamischen Unwucht ähnlich ist, ermittelt werden. Dazu sind jeweils mehr oder weniger vollständige aerodynamische Berechnungen auf der Basis der Sollform und der tatsächlich gemessenen Form notwendig.

Es können jedoch auch, wie oben erwähnt, abgekürzte Berechnungen durchgeführt werden, indem nur die Unterschiede/Abweichungen von der Sollform in ein Berechnungsmodell eingesetzt und die Auswirkungen der Abweichungen näherungsweise berechnet werden.

Beispielsweise kann auch vorgesehen sein, dass bei der ersten oder zweiten Abweichungsbewertung der geometrischen Abweichung von der Sollform jeweils Längsabschnitte eines Schaufelblattes gesondert betrachtet und bewertet werden.

Es kann alternativ oder zusätzlich auch vorgesehen sein, dass bei der Abweichungsbewertung der geometrischen Abweichung von der Sollform verschiedene Längsabschnitte eines Schaufelblattes unterschiedlich gewichtet werden. Dabei wirkt sich aus, dass Abweichungen von der Sollform bei solchen Abschnitten eines Schaufelblattes, die, einen Einsatz in einer rotierenden Maschine vorausgesetzt, sich in achsferneren Regionen bewegen, wegen der höheren Geschwindigkeit stärker wirksam werden als Abweichungen, die sich in achsnahen Regionen befinden. Demgemäß können erkannte Abweichungen in Abhängigkeit von ihrem Abstand zur Rotationsachse linear oder überlinear gewichtet sein.

Dies gilt insbesondere bei Betrachtung des aerodynamischen Aspekts. Bei Betrachtung von mechanischen Aspekten kann sich ergeben, dass die achsnäheren Bereiche mechanisch stärker belastet sind als die achsfernen Bereiche, so dass für diese Belange auch eine Stärkung der Gewichtung mit abnehmendem Abstand von der Rotationsachse in Betracht gezogen werden kann.

Für einzelne Abweichungen eines Schaufelblattes von der Sollform kann ein Abweichungsmaß ermittelt werden, das beispielsweise von der betroffenen Fläche an der Oberfläche des Schaufelblattes oder auch von der Tiefe der Abweichung, gemessen von der Solloberfläche des Schaufelblattes, abhängen kann. Das Maß der Abweichungen kann dabei auch für aerodynamische Auswirkungen anders bewertet werden als für die mechanischen Auswirkungen. Mechanische und aerodynamische Auswirkungen können gemeinsam, jedoch auch getrennt voneinander betrachtet werden.

Es kann auch vorgesehen sein, dass bei der Abweichungsbewertung der geometrischen Abweichung von der Sollform jeweils Abweichungen an der Druck- und an der Saugseite (an den beiden Wirkseiten) eines Schaufelblattes unterschiedlich gewichtet werden. Dabei kann zudem vorgesehen sein, dass eine gemeinsame Abweichungsbewertung der Summe der detektierten Abweichungen mit einer oder zwei festgelegten Schwellwerten verglichen wird. Die einzelnen Abweichungen können dabei gleich oder auch unterschiedlich gewichtet und beispielsweise summiert werden. Die gemeinsame Abweichungsbewertung kann für ein Schaufelblatt dann derart eingeordnet werden, dass ermittelt wird, ob diese in einem vorgegebenen Wertefenster, d. h. zwischen einem niedrigeren und einem höheren Schwellenwert, liegt. Liegt die Abweichungsbewertung außerhalb des Bewertungsfensters, also beispielsweise unterhalb der unteren oder oberhalb der oberen Schwelle, so kann beispielsweise entschieden werden, dass Korrekturmaßnahmen möglich und/oder notwendig sind. Es kann auch ein Schwellwert festgesetzt werden, bei dessen Überschreitung Korrekturmaßnahmen nicht weiter sinnvoll sind.

Es kann auch für die Relation der Aufwandsbewertung zur Abweichungsbewertung eine entsprechende Überprüfung von Schwellenwerten erfolgen, um die Effizienz von Korrekturmaßnahmen und ihre Sinnhaftigkeit zu ermitteln oder zu überprüfen.

Es kann bei dem Verfahren auch vorgesehen sein, dass die Abweichungsbewertung in Form einer durch die geometrische Abweichung von der Sollform verursachte Lastabweichung der Windturbine unter festgelegten Bedingungen ermittelt wird. Damit wird die Last und/oder die zusätzliche Last ermittelt, der eine Windturbine oder eine andere Maschine bei gegebenen äußeren Bedingungen unterworfen ist. Liegt diese Last über einem zulässigen Schwellwert, so ist die Maschine für die entsprechenden Bedingungen gemäß dem gegebenen Standard nicht einsetzbar, und es müssen Korrekturmaßnahmen durchgeführt werden oder das entsprechende Schaufelblatt muss einer anderen Verwertung zugeführt werden.

Es kann auch vorgesehen sein, dass die erste oder zweite Abweichungsbewertung in Form einer durch die geometrische Abweichung von der Sollform verursachte Leistungsabweichung der Windturbine unter festgelegten Bedingungen ermittelt wird. In diesem Fall wird die von der Maschine umgesetzte Leistung bei den gegebenen Abweichungen ermittelt und mit den Bedingungen bei Einhaltung einer Sollform verglichen. Ist die Leistungsabweichung zu groß und überschreitet die Abweichung eine bestimmte Schwelle, die durch den Standard festgesetzt ist, so sind Korrekturmaßnahmen durchzuführen, oder das Schaufelblatt ist einer anderen Verwendung zuzuführen.

Es kann auch vorgesehen sein, dass die erste oder zweite Abweichungsbewertung in Form einer aufsummierten, durch die geometrische Abweichung von der Sollform verursachten Energiedifferenz über eine festgelegte Betriebszeit der Windturbine ermittelt wird. In diesem Fall wird überprüft, ob beispielsweise eine Windturbine innerhalb einer vorgegebenen Frist aufsummiert eine bestimmte gegebene Energiemenge erzeugen kann oder ob sie durch die Abweichungen von der Sollform unter einer bestimmten Schwelle der erzeugbaren Energie bleibt. Die in der Frist erzeugbare Energie lässt sich einfach in einen wirtschaftlichen Nutzen umrechnen, so dass die möglicherweise durchzuführenden Korrekturmaßnahmen, die sich ebenfalls kostenmäßig bewerten lassen, zu den ökonomischen Verlusten in Beziehung setzen lassen, die während des Betriebes in einer vorgegebenen Zeit ohne die Durchführung von Korrekturmaßnahmen eintreten.

Es kann beispielsweise vorgesehen sein, dass die Aufwandsbewertung in Form eines Kostenaufwandes oder eines Zeitaufwandes oder einer Verknüpfung eines Zeitaufwandes mit einem Kostenaufwand ermittelt wird. Dabei kann zudem vorgesehen sein, dass die Aufwandsbewertung nichtlinear ist, indem bei der Ermittlung des Gesamtaufwandes der Korrekturmaßnahmen bei einem einzelnen Schaufelblatt die Einsparungen durch miteinander kombinierte Korrekturmaßnahmen berücksichtigt werden.

Zur praktischen Durchführung bei Ermittlung der Abweichungen eines tatsächlichen Schaufelblattes von einer Sollform kann vorgesehen sein, dass bei der Ermittlung der geometrischen Abweichungen von einer Sollform das jeweilige Schaufelblatt dreidimensional gescannt und eine Repräsentation des Schaufelblattes in einer Datenverarbeitungsanlage gespeichert wird Hierzu kann beispielsweise ein Scan mittels eines Lasers durchgeführt werden. Um eine dreidimensionale Abbildung/Repräsentation zu erreichen, kann auch ein Scan mit einem oder mehreren Lasern von unterschiedlichen Positionen aus relativ zu einem Schaufelblatt durchgeführt werden. Eine Aufnahme der tatsächlichen Schaufelblattgeometrie kann auch manuell oder mit anderen bekannten Abtastverfahren durchgeführt werden. Dabei kann die Erfassung in einer Rasterung erfolgen, die die für diesen Zweck erforderliche Ortsauflösung gewährleistet

Das Verfahren, wie es oben erläutert wurde, erlaubt ein systematisches Qualitätsmanagement bei der serienmäßigen Herstellung von Schaufelblättern von Maschinen, insbesondere Windenergiemaschinen.

Im Folgenden wird die Erfindung anhand von Ausführungsbeispielen in Figuren einer Zeichnung gezeigt und nachfolgend erläutert. Dabei zeigt
- Fig. 1: im Querschnitt schematisch ein Schaufelblatt einer Windenergieanlage,
- Fig. 2: im Querschnitt ein Schaufelblatt mit von der Sollform abweichenden Erhebungen,
- Fig. 3: im Querschnitt ein Schaufelblatt mit von der Sollform abweichenden Ausnehmungen,
- Fig. 4: schematisch Teile einer Windenergieanlage,
- Fig. 5: eine Einrichtung zum Scannen eines Schaufelblatts,
- Fig. 6: ein System zur Bewertung von Abweichungen und Korrekturmaßnahmen sowie
- Fig. 7: einen Teil der erzeugten Datenstruktur.

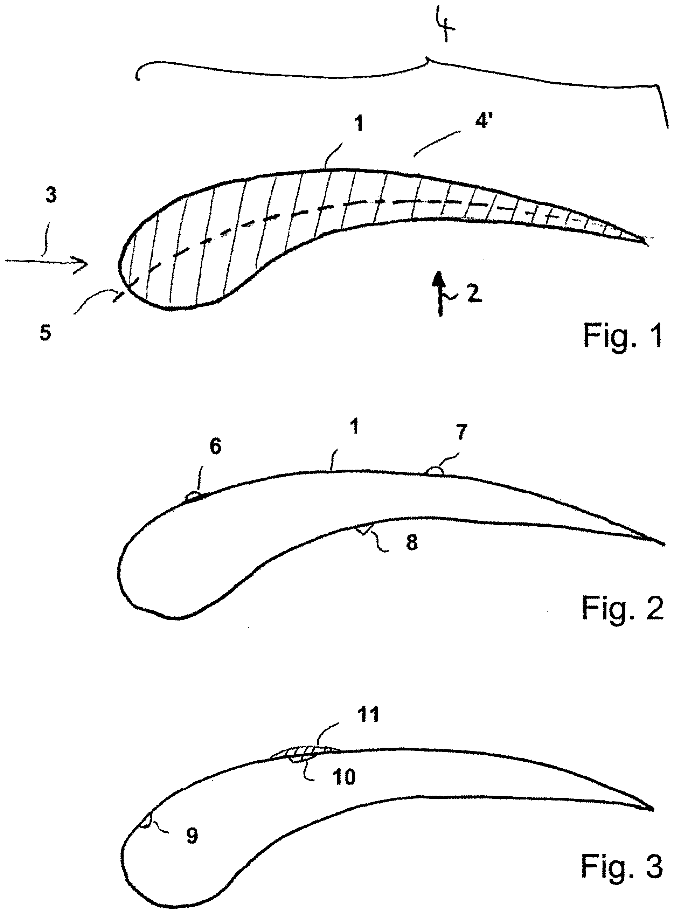

Figur 1 zeigt schematisch einen Schnitt senkrecht zur Längsachse eines Schaufelblattes einer Windenergieanlage in einer Sollform. Es ist das Tragflächenprofil des Schaufelblattes 1 erkennbar, wobei die Windrichtung durch den Pfeil 2 und die Anströmungsrichtung durch den Pfeil 3 angezeigt ist. Die Saugseite des Schaufelblattes ist mit der geschweiften Klammer 4 bezeichnet, wobei die Saugseite 4 von der Druckseite durch die gestrichelte Linie 5 getrennt wird. Die Druckseite des Schaufelblattes liegt der Saugseite 4 gegenüber.

Die Anströmungsrichtung 3 ergibt sich durch die Windrichtung 2 und die Fortbewegungsrichtung des angetriebenen Schaufelblattes 1.

In Figur 2 ist schematisch im Querschnitt ein Schaufelblatt 1 dargestellt, das beispielsweise in einem Gießverfahren mit einer Gießform hergestellt sein kann. Es können sich als Abweichung von der idealen Sollform, wie sie in Figur 1 dargestellt ist, Erhebungen 6, 7, 8 ergeben, die sowohl auf der Saugseite als auch auf der Druckseite des Schaufelblattes entstehen können, beispielsweise durch Angusskanäle, Trennfugen von Gießformen oder Unregelmäßigkeiten beim Herauslösen eines Schaufelblattes aus der Gießform. Die Abweichungen 6, 7, 8 können die Form von örtlich begrenzten, hügelartigen Erhebungen oder auch die Form von Stegen (beispielsweise hervorgerufen durch Trennfugen von Gießformen) aufweisen.

In Figur 3 sind beispielhaft an einem Querschnitt eines Schaufelblattes 1 Abweichungen 9, 10 in Form von Vertiefungen, Löchern oder Ausnehmungen dargestellt.

Korrekturmaßnahmen zur Beseitigung der Abweichungen 6, 7, 8, 9, 10 können beispielsweise im einfachsten Fall vorsehen, dass Erhebungen 6, 7, 8 abgeschliffen werden und dass Vertiefungen 9, 10 mittels einer Spachtelmasse 11 verspachtelt werden. Nach dem Verspachteln durch Spachtelmasse kann die Kontur des Schaufelblattes durch Abschleifen, Fräsen oder andere abtragende Bearbeitungsverfahren an die Sollform angepasst werden.

Es sind jedoch auch andere Korrekturmaßnahmen denkbar. Beispielsweise können Erhebungen auf einer größeren Fläche abgeschliffen werden, um die Übergänge auf der Oberfläche des Schaufelblattes möglichst gleichförmig zu gestalten. Vertiefungen 9, 10 können auch zum besseren Halt einer Spachtelmasse zunächst vertieft und danach aufgefüllt werden. Es können auch zur Bearbeitung mehrere Abweichungen zusammengefasst und gemeinsam abgeschliffen und aufgefüllt werden. Es kann auch vorgesehen sein, im Bereich von Abweichungen gezielt Ausnehmungen in einem Schaufelblatt vorzusehen, die durch Einlageteile gefüllt werden. Die Einlageteile können eingeklebt und nachträglich verspachtelt und geschliffen werden.

Das Auffüllen von Material kann auch durch Auflegen zusätzlicher Materiallagen, Faserspritzen oder Gießauftrag erfolgen.

Die vorliegende Erfindung hat das Ziel, festgestellte Abweichungen bei einem oder mehreren Schaufelblättern zunächst zu bewerten, um festzustellen, welche mechanischen und/oder aerodynamischen Wirkungen diese Abweichungen im Betrieb haben, ob die Abweichungen durch Korrekturmaßnahmen beseitigbar sind, welchen Aufwand die Korrekturmaßnahmen im Einzelnen oder auch gruppenweise zusammengefasst und wie der Aufwand der Korrekturmaßnahmen zu den Wirkungen der Abweichungen ins Verhältnis gesetzt werden kann. Dabei kann auch berücksichtigt werden, inwieweit durch die vorgeschlagenen Korrekturmaßnahmen bei den gegebenen Abweichungen dem Sollzustand / der Sollform des Schaufelblattes nahegekommen werden kann. Sind die Abweichungen beispielsweise nur teilweise korrigierbar, so ist der Aufwand der Korrekturmaßnahmen mit dem erzielbaren Erfolg und den verbleibenden Restabweichungen von der Sollform in Beziehung zu setzen und zu bewerten, ob ein festgesetzter Standard für die zugelassenen Abweichungen von der Sollform überhaupt erreicht wird und ob der Aufwand, der für die Korrekturmaßnahmen getrieben werden muss, in einem ökonomisch sinnvollen Verhältnis zum erreichbaren Nutzen steht. Auf der Basis einer solchen Analyse können dann die Korrekturmaßnahmen priorisiert und die wirksamsten Korrekturmaßnahmen mit dem geringstnotwendigen Aufwand zuerst durchgeführt werden. Dabei kann eine Liste erzeugt werden, die die Korrekturmaßnahmen nach der Priorität ordnet, und diese Liste kann so weit abgearbeitet werden, bis die Gesamtabweichung eines Schaufelblattes von der Sollform einen nach dem gesetzten Standard noch zulässigen Wert erreicht.

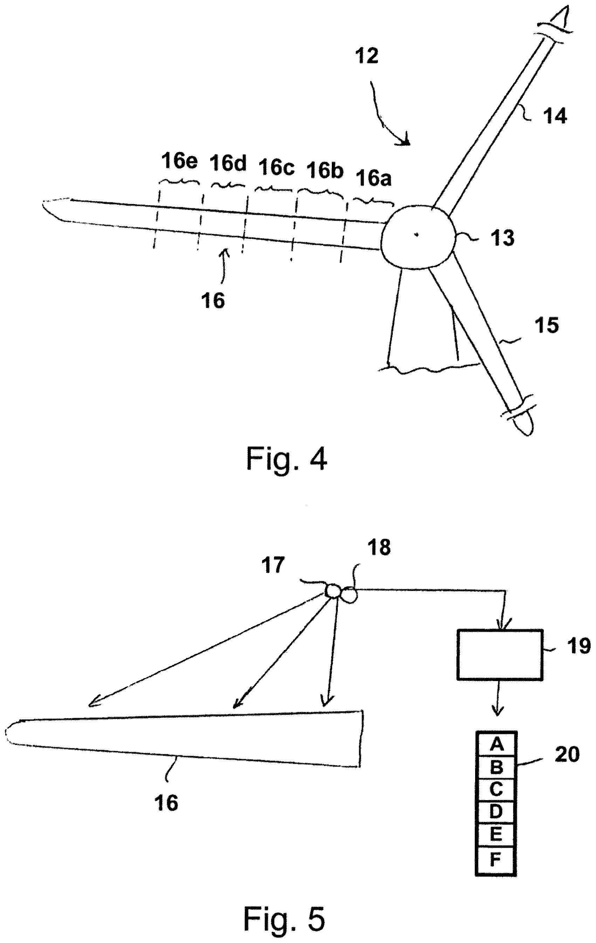

Figur 4 zeigt schematisch einen Teil einer Windenergieanlage mit einem Rotor 12, der eine Nabe 13 und drei Schaufelblätter 14, 15, 16 aufweist. Beispielhaft ist an dem Schaufelblatt 16 eine Längseinteilung in Abschnitte 16a, 16b, 16c, 16d, 16e gezeigt. Bei der Bewertung der Abweichungen des Schaufelblattes 16 von der Sollform kann beispielsweise die Information einfließen, in welchem der Längsabschnitte des Schaufelblattes die jeweiligen Abweichungen liegen. Dabei werden Abweichungen in radial weiter außen mit größerem Abstand von der Nabe 13 liegender Position stärker bewertet als radial weiter innen liegende Abweichungen. Eine Abweichung im Abschnitt 16e wirkt sich auf die Leistung einer Windenergieanlage wegen der größeren Anströmungsgeschwindigkeit stärker aus als eine Abweichung im Abschnitt 16a in Nabennähe. Dabei hängt die Relevanz der einzelnen Abweichungen im Wesentlichen jedoch zusätzlich davon ab, welche Form und Größe die Abweichungen, beispielsweise Erhebungen oder Ausnehmungen, haben.

Figur 5 zeigt schematisch eine Einrichtung zur Erfassung der dreidimensionalen Form eines Schaufelblattes 16 mit einer Lichtquelle 17, die beispielsweise durch einen Laser gebildet sein kann, sowie einer Abtasteinrichtung 18 zur Erfassung der Reflexionen des Laserlichts. Die Abtastdaten werden an eine Analyseeinrichtung 19 geleitet, die aus den Daten die dreidimensionale tatsächliche Form des Schaufelblattes 16 ermittelt und diese mit einer Sollform vergleicht. Als Differenz wird ein Vektor oder eine Matrix 20 ausgegeben, der/die die Abweichungen A, B, C, D, E, F sowie ihre jeweilige Position am Schaufelblatt 16 und die jeweilige geometrische Form und Größe enthält. Dieser Vektor wird im Folgenden weiterverarbeitet.

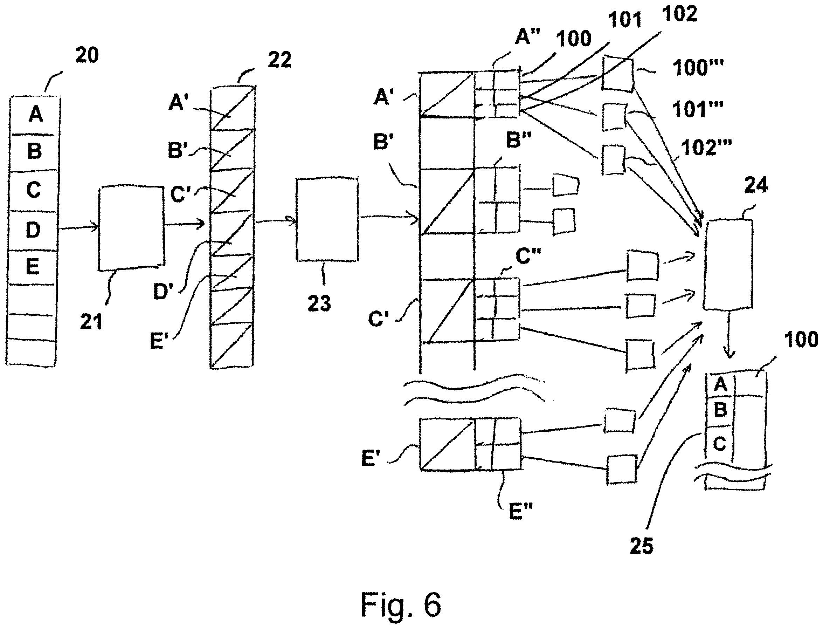

In Figur 6 ist dargestellt, dass der Vektor A, B, C, D, E, F, der in Figur 6 mit 20 bezeichnet ist, in der Einrichtung 21 zur Ermittlung einer Abweichungsbewertung weiter verarbeitet wird. In der Einrichtung 21 wird den einzelnen lokalen Abweichungen A, B, C, D, E, F eines Schaufelblattes oder gegebenenfalls auch mehrerer Schaufelblätter jeweils einzeln eine Abweichungsbewertung A', B', C', D', E', F' zugeordnet, wobei die geometrische Größe und Art der Abweichung sowie die Position der Abweichung an dem jeweiligen Schaufelblatt berücksichtigt und zu einer Abweichungsbewertung verarbeitet werden können. Die Abweichungsbewertung kann für jede einzelne Abweichung einen Wert darstellen, der beispielsweise durch den Vergleich der aerodynamischen Eigenschaften des Schaufelblattes mit der Abweichung mit den entsprechenden aerodynamischen Eigenschaften ohne eine solche Abweichung, d. h. bei Einhaltung der Sollform, gewonnen werden kann.

Die Abweichung kann auch unter Berücksichtigung der mechanischen Konsequenzen, wie beispielsweise Bruch- und Biegefestigkeit, bestimmt werden, oder es können Parameter der mechanischen Festigkeit mit aerodynamischen Parametern verknüpft werden.

Beispielsweise kann das Maß der Änderung der aerodynamischen Eigenschaften durch eine Abweichung dadurch bestimmt werden, dass die Parameter der Abweichung mit einer numerischen simulationsbasierten Methode verarbeitet werden, die lokal am Querschnittsprofil oder in der Gesamtgeometrie des Schaufelblatts die Veränderung der Aerodynamik durch die ermittelten Abweichungen in der Geometrie bestimmt. Es kann dabei eine differenzielle Rechenmethode angewendet werden, die nicht die aerodynamischen Eigenschaften des gesamten Schaufelblattes für eine Abweichung neu berechnet, sondern lediglich Einwirkungen einer Abweichung auf die Aerodynamik angenähert bestimmt.

Als Ergebnis der Ermittlung der Abweichungsbewertung liegt ein Vektor 22 vor, der jeweils einer Abweichung A die entsprechende Bewertung A' zuordnet. Die einzelnen Abweichungen können dabei in dem Vektor ungeordnet vorliegen oder entsprechend der Höhe ihrer Bewertung priorisiert sein.

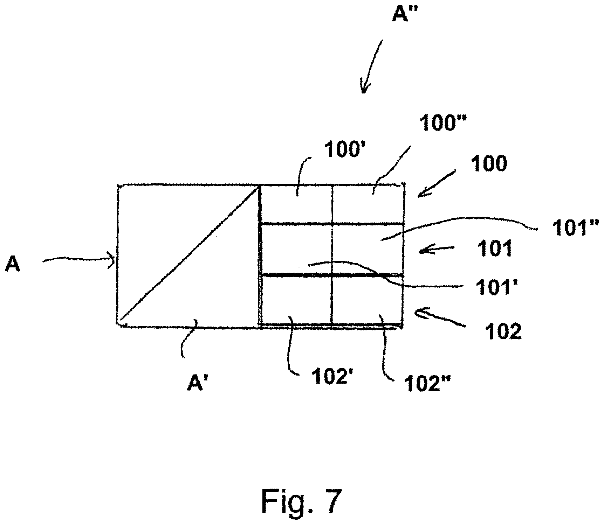

Im nächsten Schritt werden jeder einzelnen Abweichung A, B, C, D, E, F jeweils eine oder mehrere Korrekturmaßnahmen 100, 101, 102 zugeordnet (vgl. bei der Benennung auch Figur 7, in der ein Ausschnitt aus Figur 6, der die Abweichung A betrifft, vergrößert dargestellt ist).

Jeder Abweichung A, B usw. können eine oder mehrere mögliche Korrekturmaßnahmen zugeordnet werden, die jeweils die Auswirkung der Abweichung auf den Zustand und/oder die Performance des Schaufelblattes in unterschiedlichem Maß verbessern. Im Idealfall kann die entsprechende Korrekturmaßnahme den Sollzustand herstellen.

Dabei besteht die Information über eine einzelne Korrekturmaßnahme 100, 101, 102 aus der Angabe der jeweiligen Maßnahme in Form einer Arbeitsanweisung, wie beispielsweise Spachteln oder Schleifen, wobei diese Informationen über die Korrekturmaßnahmen im engeren Sinn jeweils mit 100', 101', 102' bezeichnet sind, und den entsprechenden Aufwänden 100", 101", 102". Die jeweiligen Aufwände können beispielsweise in Form von Kostenaufwänden oder Zeitaufwänden bemessen sein.

An dieser Stelle wird jeder Abweichung oder auch den priorisierten Abweichungen mit der höchsten Relevanz bereits jeweils eine Korrekturmaßnahme zugeordnet werden, wobei beispielsweise die am wenigsten aufwändigen Korrekturmaßnahmen gewählt werden können. Übersteigt die Summe der Korrekturmaßnahmen einen bestimmten Aufwand, so wird entschieden dass sich eine Reparatur/Korrektur des Schaufelblattes nicht lohnt. Es kann auch entschieden werden, dass nur eine bestimmte limitierte Anzahl der wichtigsten/relevantesten Abweichungen bearbeitet wird, weil diese den höchsten Einfluss auf die aerodynamischen und/oder mechanischen Eigenschaften des Schaufelblattes haben.

Gemäß einem ersten Ausführungsform wird für die Auswahl der Abweichungen, die zu bearbeiten sind, außer dem jeweiligen Maß der Abweichung auch die Relation der notwendigen Korrekturmaßnahme zur Abweichungsbewertung herangezogen. Der Quotient aus einem Aufwand einer Korrekturmaßnahme und der Bewertung der Abweichung dient als Entscheidungsgrundlage für die Entscheidung, ob eine bestimmte Abweichung durch eine Korrektur behandelt wird oder nicht.

Gemäß einem zweiten Ausführungsform wird die Entscheidung jedoch auch davon abhängig gemacht, inwieweit die einzelnen möglichen Korrekturmaßnahmen 100, 101, 102 die jeweilige Abweichung beseitigen können. Hierzu kann jeder Korrekturmaßnahme 100, 101, 102 ein Ergebniszustand 100‴, 101‴, 102‴ zugeordnet werden, der Aufschluss darüber gibt, wie weit durch die jeweilige Korrekturmaßnahme die Abweichung beseitigt werden kann. Es wird diejenige Korrekturmaßnahme ausgewählt, bei der das Aufwand/Nutzen-Verhältnis in Bezug auf den Ergebniszustand optimal ist.

Die Ermittlung von potenziellen Korrekturmaßnahmen zu den jeweiligen Abweichungen A, B, C, D, E findet in der Einrichtung 23 statt.

Es ist zudem eine Verknüpfungseinrichtung 24 vorgesehen, in der den jeweiligen Abweichungen A, B, C, D, E die nach gegebenen Kriterien optimierten Korrekturmaßnahmen oder keine Korrekturmaßnahme zugeordnet werden. Die Abweichungen werden gemeinsam mit den vorgeschlagenen Korrekturmaßnahmen als Vektor 25 ausgegeben. In dem in Figur 6 gegebenen Beispiel ist der Abweichung A die Korrekturmaßnahme 100 mit dem Aufwand 100" und dem Ergebniszustand 100‴ zugeordnet. Dieser Vektor 25 kann als Arbeitsprogramm für eine Bearbeitungsmaschine verwendet werden, in die das jeweilige Schaufelblatt eingebracht werden kann.

Die Ergebnisse der ermittelten Abweichungen einer Serie von Schaufelblättern werden gespeichert und können ausgewertet werden, um langfristige Trends beim Auftreten von Abweichungen zu ermitteln und diesen entgegenzuwirken.

Die Erfindung erlaubt eine systematische Qualitätssicherung, die einerseits sicherstellt, dass die fertiggestellten Schaufelblätter den gestellten Qualitätsanforderungen genügen, und andererseits dafür sorgt, dass der geforderte Qualitätsstandard mit einem minimierten Aufwand erreicht werden kann.

## Patentansprüche

1. Verfahren zur Herstellung von Schaufelblättern einer fluidgetriebenen Maschine, insbesondere einer Windturbine,
bei dem ein oder mehrere Schaufelblätter geformt werden,
in einem Untersuchungsschritt für eines oder mehrere geformte Schaufelblätter jeweils mehrere geometrische Abweichungen von einer Sollform ermittelt werden, **dadurch gekennzeichnet, dass**
jeder ermittelten geometrischen Abweichung von der Sollform für jedes Schaufelblatt bezüglich ihrer aerodynamischen und/oder mechanischen Konsequenzen jeweils durch eine erste Einrichtung (21) eine erste Abweichungsbewertung zugeordnet wird,
jeder ermittelten geometrischen Abweichung von der Sollform für jedes Schaufelblatt jeweils in einer zweiten Einrichtung (23) eine oder mehrere Korrekturmaßnahmen mit jeweils einer Aufwandsbewertung zugeordnet werden und
für jede der ermittelten geometrischen Abweichungen die erste Abweichungsbewertung mit der Aufwandsbewertung in einer Verknüpfungseinrichtung (24) verknüpft wird, wobei bei der Verknüpfung ein Quotient aus der Aufwandsbewertung und der ersten Abweichungsbewertung gebildet wird und aus dem Ergebnis der Verknüpfung die durchzuführenden Korrekturmaßnahmen ermittelt werden, wobei die durchzuführenden Korrekturmaßnahmen summiert werden und, wenn eine bestimmte Aufwandsbewertung überschritten wird, entschieden wird, dass sich die Korrekturmaßnahmen nicht lohnen.

2. Verfahren zur Herstellung von Schaufelblättern einer fluidgetriebenen Maschine, insbesondere einer Windturbine, bei dem
ein oder mehrere Schaufelblätter geformt werden,
in einem Untersuchungsschritt für eines oder mehrere geformte Schaufelblätter jeweils mehrere geometrische Abweichungen von einer Sollform ermittelt werden, **dadurch gekennzeichnet, dass**
jeder ermittelten geometrischen Abweichung von der Sollform für jedes Schaufelblatt bezüglich ihrer aerodynamischen und/oder mechanischen Konsequenzen jeweils durch eine erste Einrichtung (21) eine erste Abweichungsbewertung zugeordnet wird,
jeder ermittelten geometrischen Abweichung von der Sollform für jedes Schaufelblatt jeweils in einer zweiten Einrichtung (23) eine oder mehrere Korrekturmaßnahmen mit jeweils einer Aufwandsbewertung zugeordnet werden,
jeder ermittelten geometrischen Abweichung für jedes Schaufelblatt bezüglich ihrer aerodynamischen und/oder mechanischen Konsequenzen unter Berücksichtigung der geplanten Korrektur jeweils eine zweite Abweichungsbewertung zugeordnet wird und
für jede der ermittelten geometrischen Abweichungen die erste und die zweite Abweichungsbewertung in einer Verknüpfungseinrichtung (24) mit der Aufwandsbewertung verknüpft werden und aus dem Ergebnis der Verknüpfung die durchzuführenden Korrekturmaßnahmen ermittelt werden, derart, dass für jede Abweichung die Korrekturmaßnahme mit dem besten Verhältnis der zweiten Abweichungsbewertung zur Aufwandsbewertung der jeweiligen Korrekturmaßnahme ausgewählt wird, wobei die durchzuführenden Korrekturmaßnahmen summiert werden und, wenn eine bestimmte Aufwandsbewertung überschritten wird, entschieden wird, dass sich die Korrekturmaßnahmen nicht lohnen.

3. Verfahren nach einem der Ansprüche 1 oder 2, **dadurch gekennzeichnet, dass** bei der Ermittlung der ersten oder zweiten Abweichungsbewertung der geometrischen Abweichung von der Sollform aufgrund eines bestehenden aerodynamischen Modells durch eine differenzielle Änderung eine Differenz eines aerodynamischen Wertes zugeordnet wird.

4. Verfahren nach einem der Ansprüche 1 bis 3, **dadurch gekennzeichnet, dass** bei der ersten oder zweiten Abweichungsbewertung der geometrischen Abweichung von der Sollform jeweils Längsabschnitte eines Schaufelblattes gesondert betrachtet und bewertet werden.

5. Verfahren nach einem der Ansprüche 1 bis 4, **dadurch gekennzeichnet, dass** die erste oder zweite Abweichungsbewertung in Form einer durch die geometrische Abweichung von der Sollform verursachte Leistungsabweichung der Windturbine unter festgelegten Bedingungen angegeben wird.

6. Verfahren nach einem der Ansprüche 1 bis 4, **dadurch gekennzeichnet, dass** die erste oder zweite Abweichungsbewertung in Form einer aufsummierten, durch die geometrische Abweichung von der Sollform verursachte Energiedifferenz über eine festgelegte Betriebszeit der Windturbine angegeben wird.

7. Verfahren nach einem der Ansprüche 1 bis 6, **dadurch gekennzeichnet, dass** die Aufwandsbewertung in Form eines Kostenaufwandes oder eines Zeitaufwandes oder eine Verknüpfung eines Zeitaufwandes mit einem Kostenaufwand angegeben wird.

8. Verfahren nach einem der Ansprüche 1 bis 7, **dadurch gekennzeichnet, dass** bei der Ermittlung der geometrischen Abweichungen von einer Sollform das jeweilige Schaufelblatt dreidimensional gescannt und eine Repräsentation des Schaufelblattes in einer Datenverarbeitungsanlage gespeichert wird.

9. Verfahren nach einem der Ansprüche 1 bis 8, **dadurch gekennzeichnet, dass** nachfolgend Korrekturen bei wenigstens einem der Schaufelblätter durch Abtragen von Teilen der Oberfläche oder durch Auftragen von Material durchgeführt werden.

## Claims

1. A method for producing blades of a fluid-driven machine, in particular a wind turbine, wherein
one or more blades are shaped,
several respective geometric deviations from a target shape are determined in an examination step for one or more shaped blades, **characterized in that**
a first deviation evaluation is assigned in each case by a first device (21) to each determined geometric deviation from the target shape for each blade with respect to the aerodynamic and/or mechanical consequences thereof,
one or more corrective measures, each including an expenditure evaluation, are assigned to each determined geometric deviations from the target shape for each blade, in each case in a second device (23), and
for each of the determined geometric deviations the first deviation evaluation is linked to the expenditure evaluation in a linking device (24), wherein a quotient is found of the expenditure evaluation and the deviation evaluation during the linkage and the corrective measures to be carried out are determined from the result of the linkage, wherein the corrective measures to be carried out are added up, and when a certain expenditure evaluation is exceeded, it is decided that the corrective measures are not worthwhile.

2. A method for producing blades of a fluid-driven machine, in particular a wind turbine, wherein
one or more blades are shaped,
several respective geometric deviations from a target shape are determined in an examination step for one or more shaped blades, **characterized in that**
a first deviation evaluation is assigned in each case by a first device (21) to each determined geometric deviation from the target shape for each blade with respect to the aerodynamic and/or mechanical consequences thereof,
one or more corrective measures, each including an expenditure evaluation, are assigned to each determined geometric deviations from the target shape for each blade, in each case in a second device (23),
a respective second deviation evaluation is assigned to each determined geometric deviation for each blade with respect to the aerodynamic and/or mechanical consequences thereof, taking the planned correction into consideration, and
for each of the determined geometric deviations the first and the second deviation evaluation is linked to the expenditure evaluation in a linking device (24), and the corrective measures to be carried out are determined from the result of the linkage such that for each deviation, the corrective measure with the best ratio of the second deviation evaluation to the expenditure evaluation of the respective corrective measure is selected, wherein the corrective measures to be carried out are added up, and when a certain expenditure evaluation is exceeded, it is decided that the corrective measures are not worthwhile.

3. The method according to any one of claims 1 or 2, **characterized in that**, in the determination of the first or second deviation evaluation, a difference of an aerodynamic value is assigned to the geometric deviation from the target shape based on an existing aerodynamic model by way of a differential change.

4. The method according to any one of claims 1 to 3, **characterized in that** longitudinal sections of a blade are each considered and assessed separately in the first or second deviation evaluation of the geometric deviation from the target shape.

5. The method according to any one of claims 1 to 4, **characterized in that** the first or second deviation evaluation is indicated in the form of a performance deviation of the wind turbine caused by the geometric deviation from the target shape under defined conditions.

6. The method according to any one of claims 1 to 4, **characterized in that** the first or second deviation evaluation is indicated in the form of an added-up energy difference over a defined operating time of the wind turbine caused by the geometric deviation from the target shape.

7. The method according to any one of claims 1 to 6, **characterized in that** the expenditure evaluation is indicated in the form of a cost expenditure or a time expenditure or a linkage of a time expenditure to a cost expenditure.

8. The method according to any one of claims 1 to 7, **characterized in that** the respective blade is scanned three-dimensionally in the determination of the geometric deviations from a target shape, and a representation of the blade is stored in a data processing system.

9. The method according to any one of claims 1 to 8, **characterized in that** thereafter corrections are carried out on at least one of the blades by removing parts of the surface or by applying material.

## Revendications

1. Procédé de fabrication de pales d'une machine entraînée par un fluide, en particulier d'une éolienne,
dans lequel une ou plusieurs pales sont formées,
au cours d'une étape d'examen, pour une ou plusieurs pales formées, plusieurs écarts géométriques par rapport à une forme cible sont déterminés, **caractérisé en ce qu'**
à chaque écart géométrique déterminé par rapport à la forme cible pour chaque pale est associée, par l'intermédiaire d'un premier dispositif (21), une première évaluation d'écart au regard de ses conséquences aérodynamiques et/ou mécaniques,
à chaque écart géométrique déterminé par rapport à la forme cible pour chaque pale est/sont associée(s), dans un second dispositif (23), une ou plusieurs mesures correctives, chacune avec une évaluation de coût, et
pour chacun des écarts géométriques déterminés, la première évaluation d'écart est reliée à l'évaluation d'investissement dans un dispositif de rapprochement (24), dans lequel le rapprochement forme un quotient de l'évaluation de coût et de la première évaluation de l'écart, et les mesures correctives à effectuer sont déterminé à partir du résultat du rapprochement, dans lequel les mesures correctives à mettre en oeuvre sont additionnées et, si une certaine évaluation de coût est dépassée, il est décidé que les mesures correctives n'en valent pas la peine.

2. Procédé de fabrication de pales d'une machine entraînée par un fluide, en particulier d'une éolienne, dans lequel
une ou plusieurs pales sont formées,
au cours d'une étape d'examen, pour une ou plusieurs pales formées, plusieurs écarts géométriques par rapport à une forme cible sont déterminés, **caractérisé en ce qu'**
à chaque écart géométrique déterminé par rapport à la forme cible pour chaque pale est associée, par l'intermédiaire d'un premier dispositif (21), une première évaluation d'écart au regard de ses conséquences aérodynamiques et/ou mécaniques,
à chaque écart géométrique déterminé par rapport à la forme cible pour chaque pale est/sont associée(s), dans un second dispositif (23), une ou plusieurs mesures correctives, chacune avec une évaluation de coût,
à chaque écart géométrique déterminé pour chaque pale est associée une seconde évaluation d'écart au regard de ses conséquences aérodynamiques et/ou mécaniques, compte tenu de la correction prévue, et
pour chacun des écarts géométriques déterminés, la première et la seconde évaluation d'écart sont rapprochées dans un dispositif de rapprochement (24) avec l'évaluation de coût et les mesures correctives à effectuer sont déterminées à partir du résultat du rapprochement, de telle sorte que pour chaque écart pour l'évaluation de coût de la mesure corrective respective, la mesure corrective présentant le meilleur rapport de la seconde évaluation d'écart est sélectionnée, dans lequel les mesures correctives à mettre en oeuvre sont additionnées et, si une certaine évaluation de coût est dépassée, il est décidé que les mesures correctives n'en valent pas la peine.

3. Procédé selon l'une des revendications 1 ou 2, **caractérisé en ce que** lors de la détermination de la première ou de la seconde évaluation de l'écart géométrique par rapport à la forme cible sur la base d'un modèle aérodynamique existant, une différence d'une valeur aérodynamique est associées via une modification différentielle.

4. Procédé selon l'une des revendications 1 à 3, **caractérisé en ce que** lors de la première ou de la seconde évaluation de l'écart géométrique par rapport à la forme cible, des sections longitudinales d'une pale sont considérées et évaluées séparément.

5. Procédé selon l'une des revendications 1 à 4, **caractérisé en ce que** la première ou la seconde évaluation d'écart est spécifiée sous la forme d'un écart de performance de l'éolienne provoqué par l'écart géométrique par rapport à la forme cible dans des conditions spécifiées.

6. Procédé selon l'une des revendications 1 à 4, **caractérisé en ce que** la première ou la seconde évaluation de l'écart est spécifiée sous la forme d'une différence d'énergie cumulée provoquée par l'écart géométrique par rapport à la forme cible pendant une durée de fonctionnement spécifiée de l'éolienne.

7. Procédé selon l'une des revendications 1 à 6, **caractérisé en ce que** l'évaluation de coût est définie sous la forme d'une dépense financière ou d'une dépense de temps ou d'un lien entre une dépense de temps et une dépense financière.

8. Procédé selon l'une des revendications 1 à 7, **caractérisé en ce que** lors de la détermination des écarts géométriques par rapport à une forme cible, la pale respective est balayée en trois dimensions et une représentation de la pale est enregistrée dans une installation de traitement de données.

9. Procédé selon l'une des revendications 1 à 8, **caractérisé en ce que** des corrections sont ensuite effectuées sur au moins une des pales par enlèvement de parties de la surface ou par application de matière.
